# EUROPEAN PATENT APPLICATION

(11) **EP 4 800 840 A1**
(43) Date of publication of application: **02.09.2026**
(21) Application number: 24882944.2
(22) Date of filing: 19.09.2024
(51) Int. Cl.: H01Q 1/38, H01Q 1/32, G02B 1/00, G02B 1/11, B60R 1/12

(54) **ANTENNA AND ANTENNA ASSEMBLY INCLUDING SAME**

(30) Priority: 23.10.2023 KR 20230142275
(71) Applicant: KCC GLASS Corporation, Seoul 06526 (KR)
(72) Inventor: PARK, Ji-Su, Seongnam-si, Gyeonggi-do 13634 (KR); CHO, Seong-Dae, Seongnam-si, Gyeonggi-do 13481 (KR); PARK, Sang-Jin, Yongin-si, Gyeonggi-do 16851 (KR); BOK, Jin-Bi, Seoul 06095 (KR); KIM, Kyungmin, Yongin-si, Gyeonggi-do 16909 (KR)
(74) Representative: Pfenning, Meinig & Partner mbB
(86) International application number: PCT/KR2024/096213
(87) International publication number: WO 2025/089918

(57) **Abstract**

Disclosed is an antenna provided to be placed in a close contact state of being in close contact with a glass having a refractive index of 1.5 or more and 1.55 or less, the antenna including: a base layer; and a coating layer coated on the base layer so that at least a portion of the coating layer is disposed between the base layer and the glass in the close contact state, wherein a coating refractive index that is a refractive index of the coating layer is greater than or equal to any one of a glass refractive index that is a refractive index of the glass and a base refractive index that is a refractive index of the base layer and is smaller than or equal to the other thereof.

## Description

### [Technical Field]

The present invention relates to an antenna and an antenna assembly including the same

### [Background Art]

With commercialization of vehicle-to-vehicle wireless communication services such as cellular vehicle-to-everything communication (CV2X), antennas for supporting such services in vehicles are being developed. Recently, there has been an increasing demand for antennas for supporting communication services of 5G or more, which are bands of next-generation communication services. For example, such an antenna may be a shark fin antenna for a vehicle.

A shark fin antenna for a vehicle is provided to receive signals from a 4G (Long Term Evolution (LTE)) communication band, an eCall communication band, industrial, scientific, and medical (ISM) wireless communication bands, the Global Positioning System (GPS), a global navigation satellite system (GNSS), a digital multimedia broadcasting (DMB) system, a digital audio broadcasting (DAB), or an integrated services digital broadcasting terrestrial (ISDB-T) system. Meanwhile, because such a shark fin antenna for a vehicle is manufactured in a shape that protrudes from the glass of a vehicle, there is a problem that an aesthetic factor of a vehicle's exterior is diminished. To overcome such a problem, research on transparent antennas for replacing the existing shark fin antennas is actively underway.

A transparent antenna for a vehicle may be located inside or outside the glass of a vehicle. A transparent antenna located inside the glass is provided to be inserted between layers of laminated glass. In addition, a transparent antenna located outside the glass is provided to be in close contact with an inner side surface of the glass or four sides of laminated glass.

Meanwhile, the conventional antennas inserted into or attached to the inside or outside of the glass have a problem that a pattern and a boundary portion of the antenna itself are exposed to the outside and may interfere with a driver's field of vision or cause an aesthetic factor of a vehicle to be diminished.

### [Disclosure]

### [Technical Problem]

Accordingly, the present invention is directed to providing an antenna that minimizes interference with a driver's field of vision and diminishment of a vehicle's aesthetic factor by minimizing exposure of a pattern and a boundary portion of the antenna itself to the outside.

### [Technical Solution]

According to one aspect of the present invention for achieving the above objective, there is provided an antenna provided to be placed in a close contact state of being in close contact with a glass having a refractive index of 1.5 or more and 1.55 or less, the antenna including: a base layer; and a coating layer coated on the base layer so that at least a portion of the coating layer is disposed between the base layer and the glass in the close contact state, wherein a coating refractive index that is a refractive index of the coating layer is greater than or equal to any one of a glass refractive index that is a refractive index of the glass and a base refractive index that is a refractive index of the base layer and is smaller than or equal to the other thereof.

In addition, the coating refractive index may be greater than or equal to the glass refractive index and smaller than or equal to the base refractive index.

In addition, based on when the antenna is in the close contact state, when directions in which the antenna and the glass are oriented toward each other are close contact directions, the coating layer may be provided as a plurality of coating layers, and the plurality of coating layers may include: a first coating layer coated on one side of the base layer in one of the close contact directions; and a second coating layer coated on the other side of the base layer in the other of the close contact directions.

In addition, a hardness of the second coating layer may be greater than a hardness of the first coating layer.

In addition, based on when the antenna is in the close contact state, when directions in which the antenna and the glass are oriented toward each other are close contact directions, a thickness of the coating layer in the close contact directions may be smaller than a thickness of the base layer in the close contact directions.

In addition, the coating layer may include a quencher.

In addition, the antenna may further include a pattern forming layer that is disposed between the glass and the coating layer and forms a pattern of the antenna when the antenna is in the close contact state, and the pattern forming layer may further include: a plurality of pattern determining portions that determine a shape of the pattern; and a resin layer having a plurality of pattern grooves, into one of which each of the plurality of pattern determining portions are inserted, formed therein.

In addition, based on when the antenna is in the close contact state, when directions in which the antenna and the glass are oriented toward each other are close contact directions, the plurality of pattern determining portions may each include: an electrode layer; and a plurality of blackened layers disposed to be spaced from each other in the close contact directions with the electrode layer disposed therebetween.

In addition, there is provided an antenna assembly including: a glass; and an antenna that is in close contact with the glass, wherein the antenna includes: a base layer; and a coating layer disposed between the base layer and the glass, and a coating refractive index that is a refractive index of the coating layer is greater than or equal to any one of a glass refractive index that is a refractive index of the glass and a base refractive index that is a refractive index of the base layer and is smaller than or equal to the other thereof.

In addition, when directions in which the antenna and the glass are oriented toward each other are close contact directions, the glass may include: a first glass region that is in close contact with one side of the antenna in one of the close contact directions; and a second glass region that is in close contact with the other side of the antenna in the other of the close contact directions, and the first glass region and the second glass region may be laminated to each other in the close contact directions with the antenna disposed therebetween based on the close contact directions.

Further, when directions in which the antenna and the glass are oriented toward each other are close contact directions, any one of one side and the other side of the antenna in the close contact directions may be in close contact with the glass, and the other may be exposed to the outside of the antenna assembly.

### [Advantageous Effects]

An antenna according to the present invention has an effect of minimizing interference with a driver's field of vision and diminishment of a vehicle's aesthetic factor by minimizing exposure of a pattern and a boundary portion of the antenna itself to the outside.

In addition, an antenna according to the present invention has effects of reducing a driver's visual noise and improving the antenna's performance by minimizing refraction and reflection of light when the antenna is attached to or inserted into a glass.

### [Description of Drawings]

FIG. 1 is a front view of an antenna assembly according to one embodiment of the present invention.
FIG. 2 is a cross-sectional view along line A-A' of FIG. 1.
FIG. 3 is a cross-sectional view of an antenna assembly according to another embodiment of the present invention.

### [Modes of the Invention]

Hereinafter, some embodiments of the present invention will be described in detail with reference to the exemplary drawings. It should be noted that, in assigning reference numerals to components of each drawing, like components are denoted by like reference numerals wherever possible even when the components are shown in different drawings. In addition, in describing embodiments of the present invention, when detailed description of a related known configuration or function is determined as hindering understanding of the embodiments of the present invention, the detailed description thereof will be omitted.

In addition, in describing components of embodiments of the present invention, terms such as first, second, A, B, (a), and (b) may be used. Such terms are only for distinguishing one component from another component, and the essence, order, sequence, or the like of the corresponding component is not limited by the terms. When a certain component is described as being in "close contact" with another component, it should be understood that the component may be directly in close contact with the other component, but still another component may be in "close contact" between the two components.

Hereinafter, an antenna assembly 10 according to one embodiment of the present invention will be described with reference to the drawings.

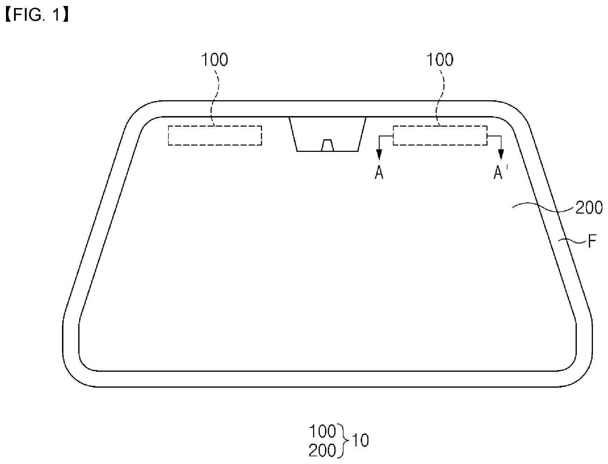

Referring to FIG. 1, in one example, the antenna assembly 10 may be provided in a vehicle. In a specific example, the antenna assembly 10 may be provided at the front or rear of a vehicle and may be disposed to be fixed to a vehicle frame F. The antenna assembly 10 may include an antenna 100 and a glass 200.

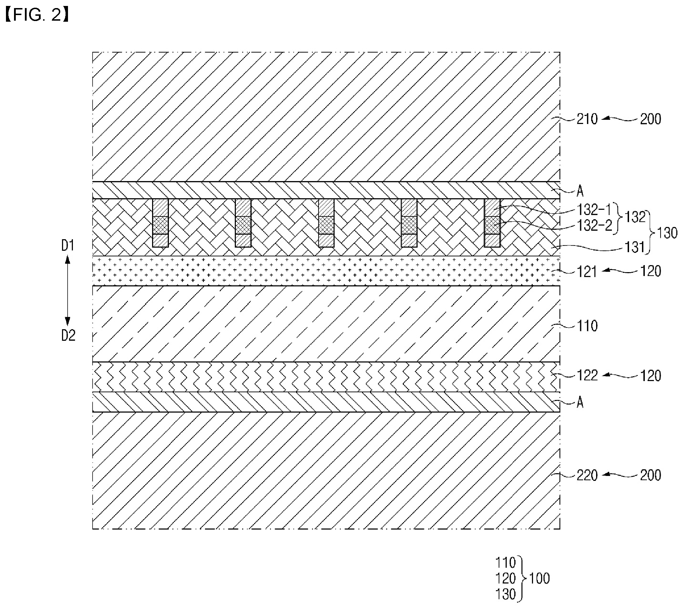

Referring also to FIG. 2, the antenna 100 may be in close contact with the glass 200. For example, when a user views the antenna 100 that is in close contact with the glass 200, the antenna 100 may be observed as transparent. In other words, the antenna 100 may be provided so that visibility thereof is minimized. The antenna 100 may be referred to as "transparent antenna." In a specific example, when a user views the antenna 100 that is in close contact with the glass 200, a pattern and an edge of the antenna 100 may not be observed by the user. The user may include not only a driver of a vehicle on which the antenna assembly 10 is mounted, but also a driver of another vehicle located outside the vehicle. The antenna 100 may include a base layer 110, a coating layer 120, and a pattern forming layer 130.

The base layer 110 may be a base film of the antenna 100. For example, the base layer 110 may be made of one or more materials of polyethylene terephthalate (PET), polyimide, and acrylic. Preferably, the base layer 110 may be made of PET. A first thickness of the base layer 110 that is a thickness in close contact directions may be greater than a second thickness of the coating layer 120 that is a thickness in the close contact directions. The close contact directions may be defined as directions in which the antenna 100 and the glass 200 are oriented toward each other. The close contact directions may include a first close contact direction D1 and a second close contact direction D2. The first close contact direction D1 may be defined as a direction in which the base layer 110 is oriented toward the pattern forming layer 130. The second close contact direction D2 may be defined as the opposite direction of the first close contact direction D1.

In addition, for example, the first thickness may be 50 µm or more and 100 µm or less. However, the present invention is not limited to such an example, and the first thickness may have any value thicker than the second thickness.

The coating layer 120 may be an index matching layer that is disposed between two different materials and can reduce a difference in refractive index between the two different materials. In other words, the coating layer 120 may be coated on a boundary surface between two different materials and may match indices of the two different materials. The coating layer 120 may be coated on the base layer 110. In a close contact state, at least a portion of the coating layer 120 may be disposed between the base layer 110 and the glass 200. The close contact state may be a state in which the glass 200 and the antenna 100 are in close contact with each other.

A coating refractive index that is a refractive index of the coating layer 120 may be greater than or equal to any one of a glass refractive index and a base refractive index and may be smaller than or equal to the other thereof. The glass refractive index may be a refractive index of the glass 200. In addition, the base refractive index may be a refractive index of the base layer 110.

For example, the coating refractive index may be greater than or equal to the glass refractive index. In a more specific example, the coating refractive index may be greater than the glass refractive index. For example, the coating refractive index may be 1.55 or more and 1.6 or less. In addition, for example, the glass refractive index may be 1.5 or more and 1.55 or less.

In addition, the coating refractive index may be smaller than or equal to the base refractive index. In a specific example, the coating refractive index may be smaller than the base refractive index. In addition, for example, the base refractive index may be 1.6 or more and 1.65 or less. In a more specific example, the coating refractive index may be greater than the glass refractive index and smaller than the base refractive index. When the coating refractive index is greater than the glass refractive index and smaller than the base refractive index, exposure of a boundary (an edge) of the antenna 100 to a driver may be prevented due to a difference in refractive index between the glass refractive index and the base refractive index. When the exposure of the boundary of the antenna 100 to the driver is prevented in this way, interference with a driver's field of vision and diminishment of the vehicle's aesthetic factor can be efficiently prevented.

Hereinafter, results of comparison of visible light transmittance, haze, and color between the antenna 100 including the coating layer 120 (one example of the present invention) and an antenna not including the coating layer 120 (comparative example) will be described below.

**[Table 1]**

| | | One example of present invention | | Comparative example | |
|---|---|---|---|---|---|
| | | Glass region | Antenna region | Glass region | Antenna region |
| Visible light transmittance (%) | Measurement value (%) | 79 | 76.5 | 78 | 72.3 |
| | ΔT | 2.5 | | 5.7 | |
| Haze (%) | Measurement value (%) | 0.29 | 0.39 | 0.28 | 2.35 |
| | ΔH | 0.1 | | 2.07 | |
| Color | L* | 37.79 | 37.58 | 37.75 | 37.25 |
| | a* | -3.69 | -2.46 | -3.97 | -1.13 |
| | b* | 0.42 | 0.56 | 0.43 | 1.48 |
| | ΔL | 1.5 | | 3.1 | |

(Glass region: a region in which the glass 200 and the antenna 100 do not overlap when the antenna assembly 10 is viewed in the close contact directions, Antenna region: a region in which the glass 200 and the antenna 100 overlap when the antenna assembly 10 is viewed in the close contact directions, L*: brightness, a*: red-green color system, b*: yellow-blue color system) The brightness (L*) may be a degree to which the color is close to black or white. Specifically, L*=0 may mean the color is black, and L*=100 may mean the color is white. The red-green color system (a*) may be a degree to which the color is close to red or green. Specifically, positive (+) a* may mean the color is red, and negative (-) a* may mean the color is green.

The yellow-blue color system (b*) may be a degree to which the color is close to yellow or blue. Specifically, positive (+) b* may mean the color is yellow, and negative (-) b* may mean the color is blue.

Referring to the results of comparison of [Table 1] above, all of the differences between the glass region and the antenna region may be smaller in the antenna assembly 10 according to one example of the present invention than in the comparative example. In this way, because the transmittance difference, the haze difference, and the color difference between the glass region and the antenna region are all smaller in the antenna assembly 10 according to one example of the present invention than in the comparative example, and thus the visibility difference is reduced, transparency of the antenna assembly 10 can be maximized. Accordingly, there is an effect of minimizing recognition of a boundary between the glass 200 and the antenna 100 by a driver.

In addition, for example, the second thickness (the thickness of the coating layer 120 in the close contact directions) may be 5 µm or more and 30 µm or less. For example, when the second thickness is less than 5 µm, there is a problem that the coating layer 120 does not have a sufficient hardness, and when the second thickness exceeds 30 µm, there is a problem that the volume of the antenna 100 increases due to an excessive increase in the thickness of the coating layer 120. Accordingly, when the second thickness is 5 µm or more and 30 µm or less, there is an advantage that an excessive increase in the volume of the antenna 100 can be prevented while the coating layer 120 has a sufficient hardness.

The coating layer 120 may include a quencher. For example, the quencher may be included in an amount of 5 wt% or more and 20 wt% or less with respect to 100 wt% of the coating layer 120. For example, the quencher may be any one of carbon dioxide, wax, and an organic material. The coating layer 120 may be provided as a plurality of coating layers 120. The plurality of coating layers 120 may include a first coating layer 121 and a second coating layer 122.

The first coating layer 121 may be disposed between the base layer 110 and the pattern forming layer 130 based on the close contact directions. For example, the first coating layer 121 may be coated on a side of the base layer 110 in the first close contact direction D1. In addition, the first coating layer 121 may be in close contact with a side of the pattern forming layer 130 in the second close contact direction D2. The first coating layer 121 may include an acrylic-based compound, a quencher, a photoinitiator, and a solvent.

For example, the acrylic-based compound may be polymethyl methacrylate (PMMA). For example, the acrylic-based compound may be included in an amount of 30 wt% or more and 70 wt% or less with respect to 100 wt% of the first coating layer 121.

For example, the quencher may be silica (SiO₂). The quencher may be included in an amount of 5 wt% or more and 20 wt% or less with respect to 100 wt% of the first coating layer 121.

For example, the photoinitiator may be IRGACURE 184. The photoinitiator may be included in an amount of 1 wt% or more and 10 wt% or less with respect to 100 wt% of the first coating layer 121.

For example, the solvent may be methyl ethyl ketone (MEK). The solvent may be included in an amount of 15 wt% or more and 50 wt% or less with respect to 100 wt% of the first coating layer 121.

The above description related to the refractive index and thickness of the coating layer 120 may be referenced for the content related to the refractive index and thickness of the first coating layer 121.

The second coating layer 122 may be coated on a side of the base layer 110 in the second close contact direction D2. In other words, based on the close contact directions, the first coating layer 121 and the second coating layer 122 may be disposed to be spaced from each other with the base layer 110 disposed therebetween.

The hardness of the second coating layer 122 may be greater than the hardness of the first coating layer 121. The second coating layer 122 may be referred to as "hard coating layer." The second coating layer 122 may have a blocking preventing property that can prevent a problem of adhesion between two different layers (a blocking phenomenon: a phenomenon in which smoothsurfaced films or sheets stick to each other and do not separate easily).

The second coating layer 122 may include an acrylic-based compound, a quencher, a photoinitiator, a solvent, and a photocurable resin. For example, the second coating layer 122 may further include a photocurable resin in addition to the materials included in the first coating layer 121.

For example, the acrylic-based compound may be 3-acryloxypropyltrimethoxysilane. For example, the acrylic-based compound may be included in an amount of 30 wt% or more and 70 wt% or less with respect to 100 wt% of the second coating layer 122.

For example, the quencher may be silica (SiO₂). The quencher may be included in an amount of 5 wt% or more and 20 wt% or less with respect to 100 wt% of the second coating layer 122.

For example, the photoinitiator may be IRGACURE 184. The photoinitiator may be included in an amount of 1 wt% or more and 10 wt% or less with respect to 100 wt% of the second coating layer 122.

For example, the solvent may be methyl ethyl ketone (MEK). The solvent may be included in an amount of 15 wt% or more and 50 wt% or less with respect to 100 wt% of the second coating layer 122.

For example, the photocurable resin may be aliphatic multifunctional acrylate (Product name: MU9500, Manufacturer: Miwon Commercial Co., Ltd.). For example, the photocurable resin may be included in an amount of 5 wt% or more and 20 wt% or less with respect to 100 wt% of the second coating layer 122.

The above description related to the refractive index and thickness of the coating layer 120 may be referenced for the content related to the refractive index and thickness of the second coating layer 122.

The pattern forming layer 130 may form a pattern of the antenna 100. For example, the pattern of the antenna 100 may be an irregular pattern. However, the idea of the present invention is not limited thereto, and the pattern of the antenna 100 may be a regular pattern.

In addition, the pattern forming layer 130 may be disposed between the glass 200 and the coating layer in the close contact state. For example, a thickness of the pattern forming layer 130 in the close contact directions may be 10 µm or more and 20 µm or less. The pattern forming layer 130 may include a resin layer 131 and a pattern determining portion 132.

A pattern groove into which the pattern determining portion 132 may be inserted may be formed in the resin layer 131. The pattern groove may be a groove that is recessed in the resin layer 131 in the second close contact direction D2. In addition, the pattern determining portion 132 may be provided as a plurality of pattern determining portions 132, and the pattern groove may be provided as a plurality of pattern grooves to correspond to the plurality of pattern determining portions 132. For example, a refractive index of the resin layer 131 may be 1.5 or more and 1.6 or less. In addition, a thickness of the resin layer 131 in the close contact directions may correspond to a thickness of the pattern forming layer 130 in the close contact directions.

The pattern determining portion 132 may determine the shape of the pattern of the antenna 100. The pattern determining portion 132 may be provided as a plurality of pattern determining portions 132. The plurality of pattern determining portions 132 may be arranged to be spaced from each other in a direction intersecting the close contact directions. The pattern determining portion 132 may include a blackened layer 132-1 and an electrode layer 132-2. By having a structure in which the blackened layer 132-1 is disposed on the electrode layer 132-2, the pattern determining portion 132 has an effect of improving visibility by preventing reflection of light and an effect of preventing oxidation of the electrode layer.

The blackened layer 132-1 may be made of one or more materials of carbon, aluminum (Al), and chromium (Cr). Preferably, the blackened layer 132-1 may be made of carbon. For example, a thickness of the blackened layer 132-1 in the close contact directions may be 1 µm or more and 2 µm or less. The blackened layer 132-1 may be provided as a plurality of blackened layers 132-1. The plurality of blackened layers 132-1 may be disposed to be spaced from each other in the close contact directions with the electrode layer 132-2 disposed therebetween. For example, the plurality of blackened layers 132-1 may include a first blackened layer and a second blackened layer.

The first blackened layer may be disposed on a side of the electrode layer 132-2 in the first close contact direction D1. The second blackened layer may be disposed on a side of the electrode layer 132-2 in the second close contact direction D2. Based on the close contact directions, the second blackened layer may be disposed to face the resin layer 131. For example, a side of the second blackened layer in the second close contact direction D2 may be in close contact with the resin layer 131. In a more specific example, the second blackened layer, the electrode layer 132-2, and the first blackened layer may be sequentially disposed in the first close contact directions D1.

The electrode layer 132-2 may be made of silver (Ag), copper (Cu), nickel (Ni), iron (Fe), cobalt (Co), or tungsten (W). Preferably, the electrode layer 132-2 may be made of silver. For example, a thickness of the electrode layer 132-2 in the close contact directions may be 6 µm or more and 7 µm or less.

A laminating film A may laminate two different materials to each other. For example, the laminating film A may be polyvinyl butyral (PVB). In addition, the laminating film A may be a configuration not included in the antenna 100 according to one embodiment of the present invention. The laminating film A may be provided as a plurality of laminating films A.

The plurality of laminating films A may include a first laminating film that laminates a first glass region 210, which will be described below, and the pattern forming layer 130 to each other and a second laminating film that laminates a second glass region 220, which will be described below, and the second coating layer 122 to each other.

The first laminating film may be disposed between the first glass region 210 and the pattern forming layer 130 based on the close contact directions. For example, a side of the first laminating film in the first close contact direction D1 may be in close contact with a side of the first glass region 210 in the second close contact direction D2, and a side of the first laminating film in the second close contact direction D2 may be in close contact with a side of the pattern forming layer 130 in the first close contact direction D1.

The glass 200 may be mounted on the vehicle frame F. The antenna 100 may be inserted into the glass 200. For example, the glass 200 may be a laminated glass. The glass 200 may include the first glass region 210 and the second glass region 220.

The first glass region 210 may form a side of the antenna assembly 10 in the first close contact direction D1. Based on the close contact directions, the first glass region 210 and the pattern forming layer 130 may be disposed to face each other. For example, the first glass region 210 may be in close contact with the side of the antenna 100 in the first close contact direction D1.

For example, a thickness of the first glass region 210 in the close contact directions may be 1800 µm or more and 3100 µm or less. The first glass region 210 may be disposed further toward the first close contact direction D1 than the second glass region 220.

The second glass region 220 may form a side of the antenna assembly 10 in the second close contact direction D2. Based on the close contact directions, the second glass region 220 and the second coating layer 122 may be disposed to face each other. For example, the second glass region 220 may be in close contact with the side of the antenna 100 in the second close contact direction D2. A thickness of the second glass region 220 in the close contact directions may correspond to the thickness of the first glass region 210 in the close contact directions.

Based on the close contact directions, the first glass region 210 and the second glass region 220 may be laminated to each other in the close contact directions with the antenna 100 disposed therebetween. For example, when the antenna assembly 10 is viewed in the close contact directions, the first glass region 210 and the second glass region 220 may be laminated to each other in a remaining region of the glass 200 excluding a region in which the glass 200 and the antenna 100 overlap.

In addition, the first glass region 210 and the second glass region 220 being laminated to each other may be construed as including not only a case in which the first glass region 210 and the second glass region 220 are directly laminated to each other, but also a case in which the first glass region 210 and the second glass region 220 are indirectly laminated to each other by another configuration therebetween. For example, the first glass region 210 and the second glass region 220 may be laminated to each other by the laminating film A while the laminating film A is disposed therebetween. However, the idea of the present invention is not limited to such an example, and the first glass region 210 and the second glass region 220 may be laminated to directly come into contact with each other.

Hereinafter, a method of coating the coating layer 120 on the base layer 110 of the present invention will be described.

After the coating layer 120 is deposited on the base layer 110 through wet sputtering, the base layer 110 and the coating layer 120 are dried at 100 °C, and then the coating layer 120 is irradiated with UV light to photocure the coating layer 120, the coating layer 120 may be coated on the base layer 110.

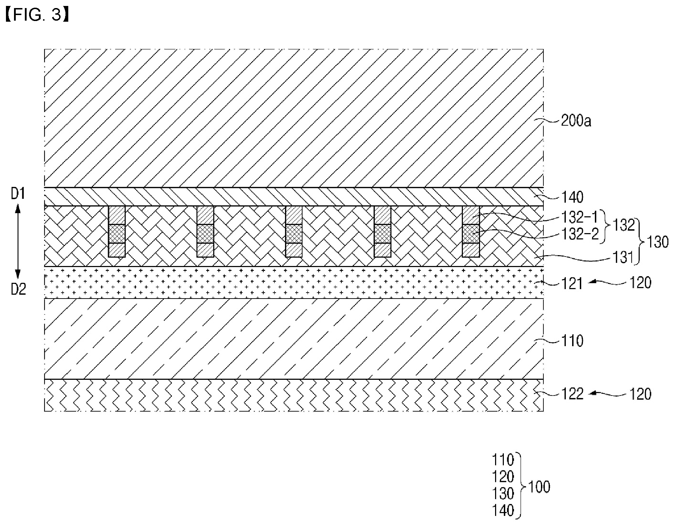

Hereinafter, an antenna assembly 10 according to another embodiment of the present invention will be described with reference to FIG. 3. When describing the antenna assembly 10 according to another embodiment of the present invention, differences from one embodiment of the present invention will be mainly described.

The antenna assembly 10 according to another embodiment of the present invention may include an antenna 100 and a glass 200a. In addition, the above description of the base layer 110, the coating layer 120, and the pattern forming layer 130 according to one embodiment of the present invention may be referenced for description of a base layer 110, a coating layer 120, and a pattern forming layer 130 of the antenna 100 according to another embodiment of the present invention. In addition, the antenna 100 according to another embodiment of the present invention may further include an adhesive layer 140.

The glass 200a may be provided as a single glass. For example, the antenna 100 may be in close contact with any one of a side of the glass 200a in the first close contact direction D1 and a side of the glass 200a in the second close contact direction D2. In a specific example, a side of the antenna 100 in the first close contact direction D1 may be in close contact with the side of the glass 200a in the second close contact direction D2. In a more specific example, the glass 200a and the pattern forming layer 130 may be adhered to each other by the adhesive layer 140.

For example, the adhesive layer 140 according to another embodiment of the present invention may be an optical clear adhesive (OCA). An OCA may be an optical adhesive. For example, the OCA may have the form of a film like a double-sided tape. In addition, the OCA may be one or more of silicon-based, acrylic-based, and urethane-based.

In addition, the antenna 100 may be in close contact with any one of the side of the glass 200a in the first close contact direction D1 and the side of the glass 200a in the second close contact direction D2, and the other of the side of the glass 200a in the first close contact direction D1 and the side of the glass 200a in the second close contact direction D2 may be exposed to the outside of the antenna assembly 10.

In the above description, just because all constituent elements constituting an embodiment of the present invention are described as being combined into one or operating in combination, the present invention is not necessarily limited to these embodiments. That is, as long as it is within the scope of the object of the present invention, all constituent elements may be selectively combined and operated in one or more. In addition, the terms such as "include", "configure" or "have" used above mean that the corresponding constituent element may be embedded unless otherwise particularly described, and thus the terms should be interpreted as being capable of further including other constituent elements, rather than excluding other constituent elements. All terms used herein including technical or scientific terms may have the same meaning as generally understood by a person having an ordinary skill in the technical field to which the present invention pertains, unless otherwise defined. Terms generally used, such as terms defined in dictionaries, should be interpreted as being consistent with the meaning of the context of related technology, and are not to be interpreted as an ideal or excessively formal meaning unless explicitly defined in the present invention.

The above description is merely an illustrative description of the technical idea of the present invention, and various modifications and variations can be made by those of ordinary skill in the art to which the present invention pertains without departing from the essential characteristics of the present invention. Accordingly, the embodiments disclosed in the present invention are not intended to limit the technical idea of the present invention, but are for illustrative purposes, and the scope of the technical idea of the present invention is not limited by the embodiments. The scope of protection of the present invention should be construed according to the claims below, and all technical ideas within the equivalent scope should be construed as being included in the scope of rights of the present invention.

## Claims

1. An antenna provided to be placed in a close contact state of being in close contact with a glass having a refractive index of 1.5 or more and 1.55 or less, the antenna comprising:
a base layer; and
a coating layer coated on the base layer so that at least a portion of the coating layer is disposed between the base layer and the glass in the close contact state,
wherein a coating refractive index that is a refractive index of the coating layer is greater than or equal to any one of a glass refractive index that is a refractive index of the glass and a base refractive index that is a refractive index of the base layer and is smaller than or equal to the other thereof.

2. The antenna of claim 1, wherein the coating refractive index is greater than or equal to the glass refractive index and smaller than or equal to the base refractive index.

3. The antenna of claim 1, wherein, based on when the antenna is in the close contact state, when directions in which the antenna and the glass are oriented toward each other are close contact directions,
the coating layer is provided as a plurality of coating layers, and
the plurality of coating layers include:
a first coating layer coated on one side of the base layer in one of the close contact directions; and
a second coating layer coated on the other side of the base layer in the other of the close contact directions.

4. The antenna of claim 3, wherein a hardness of the second coating layer is greater than a hardness of the first coating layer.

5. The antenna of claim 1, wherein, based on when the antenna is in the close contact state, when directions in which the antenna and the glass are oriented toward each other are close contact directions,
a thickness of the coating layer in the close contact directions is smaller than a thickness of the base layer in the close contact directions.

6. The antenna of claim 1, wherein the coating layer includes a quencher.

7. The antenna of claim 1, further comprising a pattern forming layer that is disposed between the glass and the coating layer and forms a pattern of the antenna when the antenna is in the close contact state,
wherein the pattern forming layer further includes:
a plurality of pattern determining portions that determine a shape of the pattern; and
a resin layer having a plurality of pattern grooves, into one of which each of the plurality of pattern determining portions are inserted, formed therein.

8. The antenna of claim 7, wherein, based on when the antenna is in the close contact state, when directions in which the antenna and the glass are oriented toward each other are close contact directions,
the plurality of pattern determining portions each include:
an electrode layer; and
a plurality of blackened layers disposed to be spaced from each other in the close contact directions with the electrode layer disposed therebetween.

9. An antenna assembly comprising:
a glass; and
an antenna that is in close contact with the glass,
wherein the antenna includes:
a base layer; and
a coating layer disposed between the base layer and the glass, and
a coating refractive index that is a refractive index of the coating layer is greater than or equal to any one of a glass refractive index that is a refractive index of the glass and a base refractive index that is a refractive index of the base layer and is smaller than or equal to the other thereof.

10. The antenna assembly of claim 9, wherein, when directions in which the antenna and the glass are oriented toward each other are close contact directions,
the glass includes:
a first glass region that is in close contact with one side of the antenna in one of the close contact directions; and
a second glass region that is in close contact with the other side of the antenna in the other of the close contact directions, and
the first glass region and the second glass region are laminated to each other in the close contact directions with the antenna disposed therebetween based on the close contact directions.

11. The antenna assembly of claim 9, wherein, when directions in which the antenna and the glass are oriented toward each other are close contact directions,
any one of one side and the other side of the antenna in the close contact directions is in close contact with the glass, and the other is exposed to the outside of the antenna assembly.
